(19)

Europäisches
Patentamt
European
Patent Office
Office européen
des brevets

(11) **EP 4 528 416 A1**

(12) **EUROPEAN PATENT APPLICATION**
published in accordance with Art. 153(4) EPC

(43) Date of publication:
**26.03.2025 Bulletin 2025/13**

(21) Application number: **23834570.6**

(22) Date of filing: **06.06.2023**

(51) International Patent Classification (IPC):
**G05D** (2006.01)

(52) Cooperative Patent Classification (CPC):
**G06V 10/80; G06V 20/56; G06V 20/58**

(86) International application number:
**PCT/CN2023/098522**

(87) International publication number:
**WO 2024/007796 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.07.2022 CN 202210783287**

(71) Applicant: **Shenzhen Yinwang Intelligent
Technologies Co., Ltd.
Shenzhen, Guangdong 518129 (CN)**

(72) Inventors:
• **WANG, Wei
Shenzhen, Guangdong 518129 (CN)**
• **HUANG, Linshan
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **DATA PROCESSING METHOD AND RELATED APPARATUS**

(57) This application provides a data processing method and a related apparatus, which may be applied to the fields of autonomous driving, intelligent vehicles, and the like. The method includes: obtaining data collected by each sensor in N sensors on a vehicle, where N is a positive integer; obtaining path planning information and/or ambient environment information of the vehicle; sampling, based on the path planning information and/or the ambient environment information, target data corresponding to each sensor from the data collected by the sensor, where a size of target data corresponding to at least one sensor in the N sensors is less than a size of data collected by the at least one sensor; and processing the target data corresponding to each sensor in the N sensors. Through implementation of this application, data processing efficiency can be improved, and a delay can be reduced.

FIG. 3

EP 4 528 416 A1

**Description**

This application claims priority to Chinese Patent Application No. 202210783287.4, filed with the China National Intellectual Property Administration on July 5, 2022 and entitled "DATA PROCESSING METHOD AND RELATED APPARATUS", which is incorporated herein by reference in its entirety.

**TECHNICAL FIELD**

This application relates to the field of vehicle technologies, and in particular, to a data processing method and a related apparatus.

**BACKGROUND**

In recent years, with thriving development of autonomous driving, various types of sensors such as a fisheye sensor, a hawkeye sensor, a monocular sensor, a binocular sensor, radar, and lidar have been used in self-driving or autonomous vehicles. Generally, data of one sensor may be scheduled through one thread. However, in a scenario in which data of a plurality of sensors with a high frame rate is simultaneously loaded and computed in parallel through a plurality of threads, data processing efficiency is low, and a delay is high.

**SUMMARY**

This application provides a data processing method and a related apparatus, to improve data processing efficiency and reduce a delay.

According to a first aspect, this application provides a data processing method. The method includes:

obtaining data collected by each sensor in N sensors on a vehicle, where N is a positive integer;
obtaining path planning information and/or ambient environment information of the vehicle; and
sampling, based on the path planning information and/or the ambient environment information of the vehicle, target data corresponding to each sensor from the data collected by the sensor, where a size of target data corresponding to at least one sensor in the N sensors is less than a size of data collected by the at least one sensor; and
processing the target data corresponding to each sensor in the N sensors.

In this application, the sensor may be a camera, a millimeter-wave radar, a lidar, and/or the like. The data collected by each sensor in the N sensors is sampled based on current path planning information and/or ambient environment information of the vehicle, to obtain the target data for subsequent processing such as driving decision-making in autonomous driving. This can reduce a data processing workload, thereby improving data processing efficiency and reducing a data processing delay. Sampling may be random sampling, sampling at a fixed interval, or the like. A sampling algorithm is not limited in this application.

In a possible implementation, the obtaining ambient environment information of the vehicle includes:

obtaining positioning information of the vehicle; and
determining the ambient environment information of the vehicle based on the positioning information and map information.

In this application, the positioning information of the vehicle is obtained by using a global navigation satellite system (global navigation satellite system, GNSS), for example, a global positioning system (global positioning system, GPS) or a BeiDou navigation satellite system (Beidou navigation satellite system, BDS), and then the ambient environment information of the vehicle is determined with reference to the map information. Operability is high.

In a possible implementation, the sampling, based on the path planning information and/or the ambient environment information of the vehicle, target data corresponding to each sensor from the data collected by the sensor includes:

determining, based on the path planning information and/or the ambient environment information of the vehicle, a weight value corresponding to each sensor in the N sensors; and
sampling, based on the weight value corresponding to each sensor, the data collected by each sensor, to obtain the target data corresponding to each sensor in the N sensors.

In this implementation, weight values corresponding to different sensors are determined based on path planning information and/or ambient environment information, and data collected by the corresponding sensors is sampled based on the weight values, to obtain target data corresponding to each sensor. In this implementation, in a current scenario, a large amount of data may be retained for a sensor with higher importance, and a small amount of data may be retained for a sensor with lower importance. In this way, the data processing workload can be reduced, thereby improving the data processing efficiency. In addition, precision of a data processing result obtained by processing the target data may not be affected. For example, it is assumed that the data collected by the sensor may be used for driving decision-making in autonomous driving. Compared with that in an implementation in which all data is directly used for driving decision-making without data sampling, in this implementation, the target data obtained through sampling in a data sampling manner in this application is used for driving decision-making. This can improve the data processing efficiency and reduce the data processing delay without affecting precision of driving decision-making.

In a possible implementation, the determining, based on the path planning information and/or the ambient environment information of the vehicle, a weight value corresponding to each sensor in the N sensors includes:

obtaining, from a weight value mapping relationship table, the weight value corresponding to each sensor and corresponding to the path planning information and/or the ambient environment information, where the weight value mapping relationship table includes a mapping relationship between path planning information and/or ambient environment information and a weight value corresponding to each sensor.

In this application, the weight value corresponding to the sensor is determined by using the weight value mapping relationship table. This implementation is simple, and operability is high.

In a possible implementation, the target data corresponding to an $i^{th}$ sensor is a frame $Y_i$, where

$$Y_i = X_i \times Z_i.$$

$X_i$ represents a quantity of frames of data collected by the $i^{th}$ sensor, $Z_i$ represents a weight value corresponding to the $i^{th}$ sensor, $0 \leq Z_i \leq 1$, and $i \in [1, N]$.

In this application, in different scenarios, a larger weight value is assigned to a sensor with higher importance, and therefore a larger amount of data may be retained; and a smaller weight value is assigned to a sensor with lower importance, and therefore a smaller amount of data may be retained. This can reduce the data processing workload.

In a possible implementation, a processing priority of the target data corresponding to each sensor in the N sensors is positively correlated with the weight value corresponding to each sensor.

In this application, target data of a sensor with higher importance may be preferentially processed. In other words, a larger weight value corresponding to a sensor indicates a higher processing priority of target data of the sensor. This helps relieve data processing pressure.

In a possible implementation, the sampling, based on the path planning information and/or the ambient environment information of the vehicle, target data corresponding to each sensor from the data collected by the sensor includes:

inputting the path planning information and/or the ambient environment information and the data collected by each sensor in the N sensors to a sampling network; and

obtaining the target data that corresponds to each sensor in the N sensors and that is output by the sampling network.

In this application, the sampling network is obtained through training in a reinforcement learning manner. Target data corresponding to different sensors is extracted by using the sampling network. Operability and applicability are high.

In a possible implementation, a processing priority of the target data corresponding to each sensor in the N sensors is positively correlated with a size of the target data corresponding to each sensor.

In this application, processing priorities of target data of different sensors are determined based on sizes of the sampled target data of the different sensors. This helps relieve data processing pressure.

According to a second aspect, this application provides a data processing apparatus. The apparatus includes:

a first obtaining unit, configured to obtain data collected by each sensor in N sensors on a vehicle, where N is a positive integer;

a second obtaining unit, configured to obtain path planning information and/or ambient environment information of the vehicle; and

a processing unit, configured to sample, based on the path planning information and/or the ambient environment information of the vehicle, target data corresponding to each sensor from the data collected by the sensor, where a size of target data corresponding to at least one sensor in the N sensors is less than a size of data collected by the at least one sensor; and

the processing unit is configured to process the target data corresponding to each sensor in the N sensors.

In a possible implementation, the second obtaining unit is specifically configured to:

obtain positioning information of the vehicle; and
determine the ambient environment information of the vehicle based on the positioning information and map information.

In a possible implementation, the processing unit is specifically configured to:

determine, based on the path planning information and/or the ambient environment information of the vehicle, a weight value corresponding to each sensor in the N sensors; and
sample, based on the weight value corresponding to each sensor, the data collected by each sensor, to obtain the target data corresponding to each sensor in the N sensors.

In a possible implementation, the processing unit is further specifically configured to:
obtain, from a weight value mapping relationship table, the weight value corresponding to each sensor and corresponding to the path planning information and/or the ambient environment information, where the weight value mapping relationship table includes a mapping relationship between path planning information and/or ambient environment information and a weight value corresponding to each sensor.

In a possible implementation, the target data corresponding to an $i^{th}$ sensor is a frame $Y_i$, where

$$Y_i = X_i \times Z_i.$$

$X_i$ represents a quantity of frames of data collected by the $i^{th}$ sensor, $Z_i$ represents a weight value corresponding to the $i^{th}$ sensor, $0 \leq Z_i \leq 1$, and $i \in [1, N]$.

In a possible implementation, a processing priority of the target data corresponding to each sensor in the N sensors is positively correlated with the weight value corresponding to each sensor.

In a possible implementation, the processing unit is specifically configured to:

input the path planning information and/or the ambient environment information and the data collected by each sensor in the N sensors to a sampling network; and
obtain the target data that corresponds to each sensor in the N sensors and that is output by the sampling network.

In a possible implementation, a processing priority of the target data corresponding to each sensor in the N sensors is positively correlated with a size of the target data corresponding to each sensor.

In a possible implementation, the processing unit includes a first processing subunit and a second processing subunit. The first processing subunit is configured to: sample, based on the path planning information and/or the ambient environment information of the vehicle, the target data corresponding to each sensor from the data collected by the sensor, and send the collected target data to the second processing subunit. The second processing subunit is configured to process the target data corresponding to each sensor in the N sensors.

In a possible implementation, the first obtaining unit, the second obtaining unit, and the first processing subunit are located in a CPU, and the second processing subunit is located in an artificial intelligence AI computing unit. For example, the AI computing unit may be an AI core.

According to a third aspect, this application provides a data processing apparatus. The data processing apparatus includes a processor, and the processor is configured to support the data processing apparatus in implementing a corresponding function in the data processing method provided in the first aspect. The data processing apparatus may further include a memory. The memory is configured to be coupled to the processor, and stores program instructions and data that are necessary for the data processing apparatus. The data processing apparatus may further include a communication interface used by the data processing apparatus to communicate with another device or a communication network.

It should be noted that the processor included in the data processing apparatus described in the third aspect may be a processor specially configured to perform these methods (referred to as a dedicated processor for ease of differentiation), or may be a processor that performs these methods by invoking a computer program, for example, a general-purpose processor. Optionally, at least one processor may further include both a special-purpose processor and a general-purpose processor.

Optionally, the computer program may be stored in the memory. For example, the memory may be a non-transitory (non-transitory) memory, for example, a read-only memory (read-only memory, ROM). The memory and the processor may be integrated on a same component, or may be separately disposed on different components. A type of the memory and a manner of setting the memory and the processor are not limited in this application.

In a possible implementation, at least one memory is located outside the data processing apparatus.

In another possible implementation, at least one memory is located in the data processing apparatus.

In still another possible implementation, a part of at least one memory is located in the data processing apparatus, and the other part of the at least one memory is located outside the data processing apparatus.

In this application, the processor and the memory may alternatively be integrated into one component. In other words, the processor and the memory may alternatively be integrated together.

The data processing apparatus in the second aspect or the third aspect of this application may be a vehicle-mounted computing platform.

According to a fourth aspect, this application provides a computer-readable storage medium, configured to store computer software instructions to be used by the data processing apparatus provided in the first aspect. The computer software instructions include a program designed for executing the first aspect.

According to a fifth aspect, this application provides a computer program. The computer program includes instructions. When the computer program is executed by a computer, the computer is enabled to perform the procedure performed by the data processing apparatus in the first aspect.

According to a sixth aspect, this application provides a chip system. The chip system includes a processor, configured to support a computing device in implementing a function in the first aspect, for example, generating or processing information in the data processing method in the first aspect. In a possible design, the chip system further includes a memory. The memory is configured to store program instructions and data that are necessary for a data sending device. The chip system may include a chip, or may include a chip and another discrete component.

According to a seventh aspect, this application provides a data processing system. The data processing system includes N sensors and the data processing apparatus according to any one of the second aspect or the third aspect, and the N sensors are deployed on a vehicle.

According to an eighth aspect, this application provides a data processing system. The data processing system includes a vehicle and a server. The server includes the data processing apparatus according to any one of the second aspect or the third aspect, and the vehicle includes N sensors.

According to a ninth aspect, this application provides a terminal. The terminal includes the data processing apparatus described in any one of the second aspect or the third aspect.

Optionally, the terminal may be a vehicle, an uncrewed aerial vehicle, or a robot. Alternatively, the terminal may be any possible smart home device, smart wearable device, smart manufacturing device, or the like.

For beneficial effects of the technical solutions provided in the second aspect to the ninth aspect of this application, refer to the beneficial effects of the technical solutions provided in the first aspect. Details are not described herein again.

**BRIEF DESCRIPTION OF DRAWINGS**

The following briefly describes the accompanying drawings used in descriptions of embodiments of this application.

FIG. 1 is a diagram of an architecture of a data processing system according to an embodiment of this application;
FIG. 2 is a diagram of configuration of a sensor on a vehicle according to an embodiment of this application;
FIG. 3 is a schematic flowchart of a data processing method according to an embodiment of this application;
FIG. 4 is a diagram of a weight value mapping relationship table according to an embodiment of this application;
FIG. 5 is a diagram of a scenario of obtaining target data according to an embodiment of this application;
FIG. 6 is a diagram of a structure of a possible data processing apparatus according to an embodiment of this application; and
FIG. 7 is a diagram of a structure of another possible data processing apparatus according to an embodiment of this application.

**DESCRIPTION OF EMBODIMENTS**

The following clearly and completely describes the technical solutions in embodiments of this application with reference to the accompanying drawings in embodiments of this application.

Some terms in this application are first described, to help a person skilled in the art have a better understanding. It should be noted that these explanations are intended to facilitate understanding of embodiments of this application, but should not be considered as a limitation on the protection scope claimed in this application.

1. Sensor

The sensor mentioned in embodiments of this application may include a vision sensor like a camera and a radar sensor. The camera may be a fisheye camera, a hawkeye camera, a monocular camera, a binocular camera, or the like. This is not limited herein. The radar sensor may include radio detection and ranging (radio detection and ranging, Radar), light detection and ranging (light detection and ranging, LiDAR), a millimeter-wave radar, and the like. This is not limited herein.

The sensor in embodiments of this application may be used in various fields such as intelligent driving, intelligent transportation, intelligent manufacturing, environment monitoring, surveying and mapping, and uncrewed aerial vehicles, and may implement one or more functions of target detection, distance measurement, speed measurement, target tracking, imaging recognition, and the like.

The sensor in embodiments of this application may be a vehicle-mounted sensor (for example, a vehicle-mounted radar), or may be a sensor used on another device. For example, the sensor may be mounted on a device like an uncrewed aerial vehicle, a robot, a railcar, a bicycle, a signal lamp, a speed measurement apparatus, or a base station. A mounting position and an object of the sensor are not limited in embodiments of this application.

2. Global navigation satellite system (global navigation satellite system, GNSS)

The GNSS may include one or more positioning systems such as a global positioning system (global positioning system, GPS) of the United States, a global navigation satellite system (global navigation satellite system, GLONASS) of Russia, a Galileo satellite navigation system (Galileo satellite navigation system, GALILEO) of the European Union, and a BeiDou satellite navigation system (Beidou navigation satellite system, BDS) of China.

The GNSS is a space-based radio navigation and positioning system that may provide a user with all-weather 3D coordinates and speed and time information at any location on the earth's surface or in near-earth space. The system may accurately position longitude, latitude, and altitude based on four satellites.

3. Reinforcement learning

Reinforcement learning is a third machine learning paradigm beside supervised learning and unsupervised learning. Reinforcement learning is a learning mechanism for learning how to map statuses to behaviors, to maximize rewards.

To facilitate understanding of embodiments of this application, the following first describes a data processing system architecture on which embodiments of this application are based.

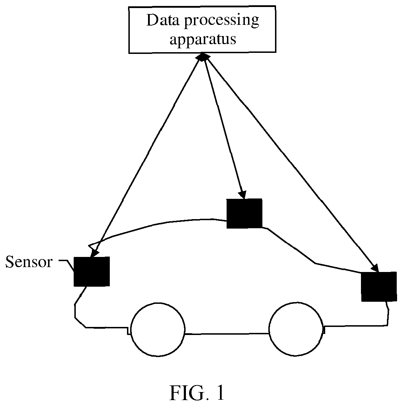

FIG. 1 is a diagram of an architecture of a data processing system according to an embodiment of this application. As shown in FIG. 1, the data processing system includes a sensor and a data processing apparatus. The sensor and the data processing apparatus may communicate with each other through a network, to send data collected by the sensor to the data processing apparatus for processing.

Sensors may be distributed around a vehicle, for example, in the front of the vehicle, on a side of the vehicle, and in the rear of the vehicle. This is not limited herein.

The data processing apparatus may be integrated into the vehicle, for example, integrated into a computing platform or a mobile data center (mobile data center, MDC) of the vehicle. Alternatively, the data processing apparatus may be located outside the vehicle, for example, integrated into a cloud server. This is not limited herein.

The data processing apparatus may receive data collected by each sensor. For example, when the sensor is an image sensor like a camera, the data collected by the sensor may be image data. For example, when the sensor is a lidar, the data collected by the sensor may be point cloud data or a point cloud image.

Generally, types of the sensors mounted on the vehicle may be different. Therefore, after receiving data collected by different sensors, the data processing apparatus usually needs to preprocess the data of the different sensors. For example, there are usually a plurality of groups of sensors such as cameras, lidars, and millimeter-wave radars on the vehicle. For data of the lidars, data collected at a same frequency and in a same time period as those of data collected by the cameras is usually used as an input data stream of a network.

Optionally, the data processing system in this embodiment of this application may further include a GNSS sensor. The GNSS sensor is configured to provide the data processing apparatus with information such as geographical coordinates related to a location of the vehicle.

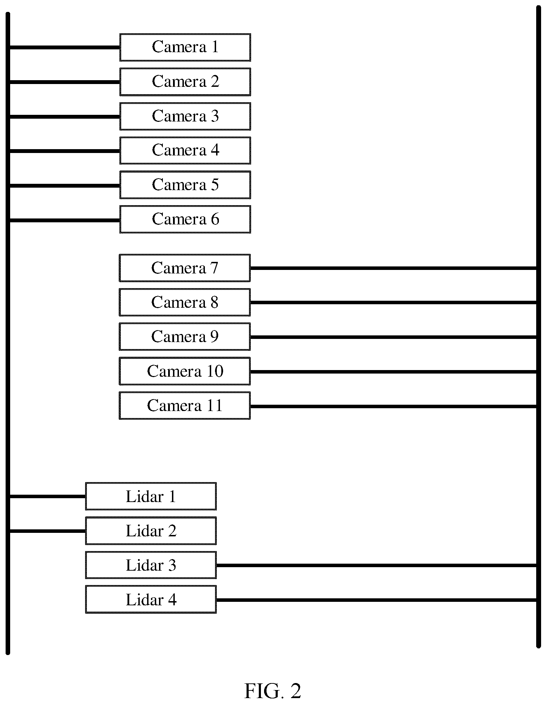

It should be noted that, in recent years, with thriving development of autonomous driving, various types of sensors are used in a self-driving vehicle or an intelligent assisted driving vehicle, and each type of sensor includes a plurality of devices. FIG. 2 is a diagram of configuration of a sensor on a vehicle according to an embodiment of this application. As shown in FIG. 2, an MDC board is equipped with 11 cameras and 4 lidars. Generally, data of a sensor (for example, a camera) may be scheduled and processed through a thread. However, in a scenario in which data of a plurality of sensors with a high frame rate is simultaneously loaded by a plurality of threads and is calculated in parallel, data processing efficiency is low, and a delay is high.

In view of this, this application provides a data processing method and a related apparatus, to improve data processing efficiency and reduce a delay.

The following describes in detail the data processing method and the data processing apparatus provided in this application.

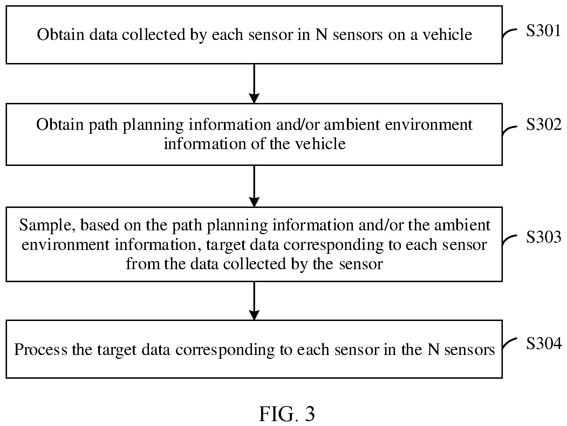

FIG. 3 is a schematic flowchart of the data processing method according to an embodiment of this application. As shown in FIG. 3, the data processing method includes steps S301 to S304. The method shown in FIG. 3 may be performed by a mobile terminal or a chip in the mobile terminal. For example, the mobile terminal may be a vehicle.

S301: Obtain data collected by each sensor in N sensors on the vehicle.

In some feasible implementations, the data collected by each sensor in the N sensors on the vehicle is obtained. The N sensors may be sensors of a same type, or the N sensors may include a plurality of sensors of different types. This is specifically determined based on an actual application scenario, and is not limited herein. For example, when the N sensors include an image sensor, data collected by the image sensor is image data. For another example, when the N sensors include lidar, data collected by the lidar is point cloud data.

Generally, when the N sensors include both an image sensor and lidar, because frame rates at which the image sensor and the lidar collect data are different, image data collected by the image sensor and point cloud data collected by the lidar may be first preprocessed, to unify a frame rate of the image data and a frame rate of the point cloud data. For example, the frame rate of the image data and the frame rate of the point cloud data may be unified as 30 frames per second. This is not limited herein.

It should be noted that, when an application scenario of this embodiment of this application is a scenario such as autonomous driving, intelligent assisted driving, or self-driving, the obtained data collected by each sensor is usually data collected by the sensor in real time, or is described as data collected by the sensor at a current moment.

S302: Obtain path planning information and/or ambient environment information of the vehicle.

In some feasible implementations, the path planning information and/or the ambient environment information of the vehicle are/is obtained. The path planning information may be understood as route information planned in advance by vehicle navigation with reference to a previous driving route of a driver under a condition of a known destination. For example, the path planning information may be that the vehicle goes straight, the vehicle turns left, the vehicle turns right, the vehicle makes a U-turn, the vehicle reverses, the vehicle brakes, the vehicle accelerates, the vehicle decelerates, the vehicle changes to a left lane, or the vehicle changes to a right lane. This is not limited herein. The ambient environment information of the vehicle may be understood as environment information of a current location of the vehicle. For example, the ambient environment information of the vehicle may include information such as traffic light intersection information, intersection information, speed limit information, speed measurement camera information, and fork information.

It should be noted that obtaining the ambient environment information of the vehicle may be understood as: obtaining positioning information of the vehicle, and then determining the ambient environment information of the vehicle based on the positioning information and map information. The positioning information of the vehicle may be determined by using a GNSS sensor or a GNSS system (for example, may be a GPS system, or may be a BeiDou system or another positioning system). This is not limited herein. Optionally, obtaining the ambient environment information of the vehicle may be further understood as: determining the ambient environment information of the vehicle based on target image data corresponding to each sensor in the N sensors at a previous moment. In other words, image recognition or point cloud data processing may be performed on the target data corresponding to each sensor at a historical moment (for example, a previous moment of a current moment), to determine the ambient environment information of the vehicle. For understanding of the target data corresponding to the sensor, refer to the following descriptions. Details are not described herein.

S303: Sample, based on the path planning information and/or the ambient environment information, the target data corresponding to each sensor from the data collected by the sensor.

In some feasible implementations, the target data corresponding to each sensor is sampled, based on the path planning information and/or the ambient environment information, from the data collected by the sensor. In other words, in this application, the target data corresponding to each sensor may be sampled, based on the path planning information, from the data collected by the sensor; the target data corresponding to each sensor may be sampled, based on the ambient environment information, from the data collected by the sensor; or the target data corresponding to each sensor may be sampled, based on the path planning information and the ambient environment information, from the data collected by the sensor. For ease of understanding, the following mainly provides description by using an example in which the target data corresponding to each sensor is sampled, based on the path planning information and the ambient environment information, from the data collected by the sensor.

A size of target data corresponding to at least one sensor included in the N sensors is less than a size of data collected by the at least one sensor. In other words, a size of discarded data of the at least one sensor is greater than 0. In this embodiment of this application, sampling may alternatively be described as extraction, selection, or the like. This is not limited herein. A sampling rule or an extraction rule may be random sampling, or may be extraction or sampling every preset time, or the like. This is not limited herein.

Specifically, sampling, based on the path planning information and/or the ambient environment information, the target data corresponding to each sensor from the data collected by the sensor may be understood as: determining, based on the path planning information and/or the ambient environment information, a weight value corresponding to each sensor in the N sensors; and then sampling, based on the weight value corresponding to each sensor, the data collected by each sensor, to obtain the target data corresponding to each sensor in the N sensors.

In a possible implementation, determining, based on the path planning information and/or the ambient environment information, a weight value corresponding to each sensor in the N sensors may be understood as: obtaining, from a weight value mapping relationship table, the weight value corresponding to each sensor and corresponding to the path planning information and/or the ambient environment information. The weight value mapping relationship table includes a mapping relationship between path planning information and/or ambient environment information and a weight value corresponding to each sensor.

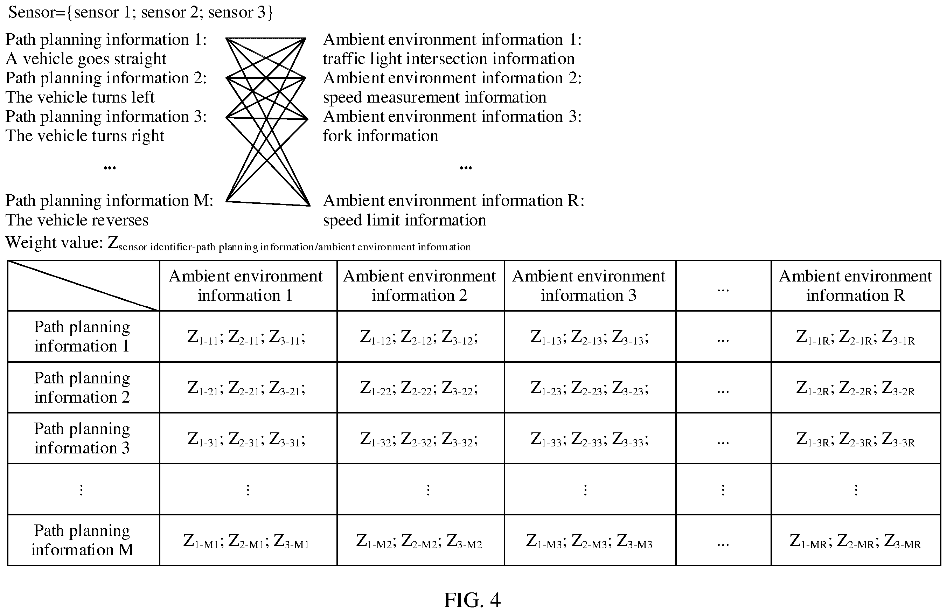

For example, FIG. 4 is a diagram of a weight value mapping relationship table according to an embodiment of this application. As shown in FIG. 4, it is assumed that there are three sensors, that is, N=3. The three sensors are respectively a sensor 1, a sensor 2, and a sensor 3. The sensor 1 is located in the front of the vehicle, the sensor 2 is located in the rear of the vehicle, and the sensor 3 is located on the right side of the vehicle. It is also assumed that the path planning information includes path planning information 1, path planning information 2, path planning information 3, ..., and path planning information M, where M is an integer greater than 0, and the ambient environment information includes ambient environment information 1, ambient environment information 2, ambient environment information 3, ..., and ambient environment information R, where R is an integer greater than 0. The path planning information 1 indicates that the vehicle turns left. The path planning information 2 indicates that the vehicle turns right. The path planning information 3 indicates that the vehicle turns right. The path planning information M indicates that the vehicle reverses. The ambient environment information 1 is traffic light intersection information. The ambient environment information 2 is speed measurement information. The ambient environment information 3 is fork information. The ambient environment information R is speed limit information. Different path planning information and different ambient environment information may be combined with each other, to generate a mapping relationship between the weight value corresponding to each sensor and both the path planning information and the ambient environment information. For example, it is assumed that the weight value is represented as $Z_{i\text{-}jk}$. Herein, i represents an $i^{th}$ sensor, j represents $j^{th}$ path planning information, k represents $k^{th}$ ambient environment information, $i \in [1, N]$, $j \in [1, M]$, and $K \in [1, R]$. In other words, $Z_{i\text{-}jk}$ represents a weight value of the $i^{th}$ sensor corresponding to the $j^{th}$ path planning information and the $k^{th}$ ambient environment information. In view of this, a table of a mapping relationship between the weight value corresponding to each sensor and both the path planning information and the ambient environment information may be generated, as shown in FIG. 4.

It should be noted that the weight value in this embodiment of this application may be understood as a sampling ratio of data. It is assumed that the target data corresponding to the $i^{th}$ sensor is a frame $Y_i$. In this case, $Y_i = X_i \times Z_i$. $X_i$ represents a quantity of frames of data collected by the $i^{th}$ sensor, $Z_i$ represents a weight value corresponding to the $i^{th}$ sensor, $0 \le Z_i \le 1$, and $i \in [1, N]$.

Optionally, the mapping relationship table may alternatively be used to determine, based on only the path planning information, the weight value corresponding to each sensor in the N sensors. In this case, based on FIG. 4, a column of ambient environment information 0 may be added to the mapping relationship table. Impact of the ambient environment information is not considered for a weight value corresponding to the column. Similarly, the mapping relationship table may alternatively be used to determine, based on only the ambient environment information, the weight value corresponding to each sensor in the N sensors. In this case, based on FIG. 4, a row of path planning information 0 may be added to the mapping relationship table. Impact of the path planning information is not considered for a weight value corresponding to the row.

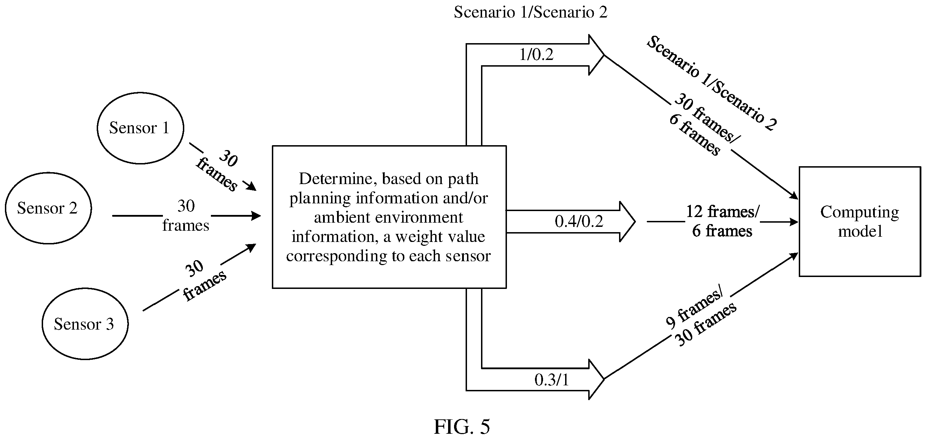

For example, FIG. 5 is a diagram of a scenario of obtaining target data according to an embodiment of this application. It is assumed that there are three sensors, that is, N=3. The three sensors are respectively a sensor 1, a sensor 2, and a sensor 3. The sensor 1 is located in the front of the vehicle, the sensor 2 is located in the rear of the vehicle, and the sensor 3 is located on the right side of the vehicle. The sensor 1, the sensor 2, and the sensor 3 each collect 30 frames of data.

Scenario 1: It is assumed that current ambient environment information of the vehicle is traffic light intersection information. For example, the vehicle is currently in a leftmost lane at a traffic light waiting for the green light. It is also assumed that path planning information is that the vehicle waits until the red light ends and the green light is on, and then goes straight through a traffic light intersection. In other words, an expected vehicle behavior is that the vehicle waits until the red light ends and the green light is on, and then goes straight through the traffic light intersection. Based on the current path planning information and ambient environment information of the vehicle, with reference to the weight value mapping relationship table, it may be determined that a weight value corresponding to the sensor 1 in the front of the vehicle is 1, a weight value corresponding to the sensor 2 in the rear of the vehicle is 0.4, and a weight value corresponding to the sensor 3 on the right side of the vehicle is 0.3. In other words, when the vehicle waits for the traffic light at the intersection, data transmitted from the sensors located in the rear and on the right side of the vehicle is not very important for subsequent self-driving, and therefore the weight value 0.4 and the weight value 0.3 are respectively assigned to both of the sensors; and data collected by the sensor in the front of the vehicle is important for subsequent self-driving, and therefore the maximum weight value 1 is assigned to the sensor. In view of this, it may be determined that a size of target data corresponding to the sensor 1 is 30 frames, a size of target data corresponding to the sensor 2 is 12 frames, and a size of target data corresponding to the sensor 3 is 9 frames. Therefore, all the 30 frames of data collected by the sensor 1 may be input to a computing model for processing, 12 frames of data are sampled from the 30 frames of data collected by the sensor 2 and then are input to the computing model for processing, and 9 frames of data are sampled from the 30 frames of data collected by the sensor 3 and then are input to the computing model for processing.

Scenario 2: It is assumed that current ambient environment information of the vehicle is fork information. In other words, there is a fork in a road section ahead of the vehicle. In addition, it is assumed that path planning information is that the vehicle goes straight through the fork. In other words, an expected vehicle behavior is that the vehicle goes straight through the fork. Based on the current path planning information and ambient environment information of the vehicle, with reference to the weight value mapping relationship table, it may be determined that a weight value corresponding to the sensor 1 in the front of the vehicle is 0.2, a weight value corresponding to the sensor 2 in the rear of the vehicle is 0.2, and a weight value corresponding to the sensor 3 on the right side of the vehicle is 1. In other words, when the vehicle goes straight through the fork, data transmitted from the sensors located in the front and the rear of the vehicle is not very important for subsequent self-driving, and therefore the weight value 0.2 is assigned to both of the sensors; and data collected by the sensor located on the right side of the vehicle is very important for subsequent self-driving, and therefore the maximum weight value 1 is assigned to the sensor. In view of this, it may be determined that a size of target data corresponding to the sensor 1 is 6 frames, a size of target data corresponding to the sensor 2 is 6 frames, and a size of target data corresponding to the sensor 3 is 30 frames. Therefore, 6 frames of data may be sampled from the 30 frames of data collected by the sensor 1 and then input to a computing model for processing, 6 frames of data may be sampled from the 30 frames of data collected by the sensor 2 and then input to the computing model for processing, and all the 30 frames of data collected by the sensor 3 are input to the computing model for processing.

It should be noted that a rule of sampling the target data from the data may be random sampling, or may be uniform sampling, for example, sampling one frame every preset time. The computing model in this embodiment of this application may be a driving behavior decision-making network. To be specific, the target data corresponding to each sensor is input to the computing model, and a next driving behavior of the vehicle, a next operation of the vehicle, or a next driving decision may be determined by using the computing model.

In another implementation, sampling, based on the path planning information and/or the ambient environment information, the target data corresponding to each sensor from the data collected by the sensor may be understood as: inputting the path planning information and/or the ambient environment information and the data collected by each sensor in the N sensors into a sampling network, to obtain the target data corresponding to each sensor in the N sensors output by the sampling network. The sampling network is obtained through training in a reinforcement learning manner.

The following describes in detail a training process of the sampling network in this embodiment of this application.

It is assumed that there are three sensors, and an initial weight value of each sensor is initialized to 1, that is, Camera_weight_1=1, Camera_weight_2=1, and Camera_weight_3=1.

A current moment $S\_t$ of an environment, a scheduling level $a\_t$ at the current moment, and a feedback reward $r\_t$ at the current moment of each sensor are initialized. Specifically:

$$S\_t\_1=0, S\_t\_2=0, \text{ and } S\_t\_3=0;$$

$$a\_t\_1=1, a\_t\_2=1, \text{ and } a\_t\_3=1;$$

and

$$r\_t\_1=1, r\_t\_2=1, \text{ and } r\_t\_3=1.$$

It is assumed that feedback reward values of the sensors at a next moment (namely, a moment t+1) are:

$$r\_t+1\_1, r\_t+1\_2, \text{ and } r\_t+1\_3.$$

The feedback reward value of each sensor may be determined based on a similarity between a driving decision of the vehicle output by the computing model and an expected driving decision of the vehicle. The similarity between the driving decision of the vehicle output by the computing model and the expected driving decision of the vehicle may be determined by using a Euclidean distance or the like. This is not limited herein. Generally, the feedback reward value of each sensor may be predefined. For example, a maximum value may be set to 100. This is not limited herein.

A total reward value is R, and R meets the following Formula 1:

$$R=r\_t+1\_1*1/Camera\_weight\_1+r\_t+1\_2*1/Camera\_weight\_2+r\_t+1\_3*1/\ Camera\ \_weight\_3$$

Generally, the total reward value R may be predefined.

It is assumed that the current ambient environment information of the vehicle is traffic light intersection information. For example, the vehicle is currently in a leftmost lane at a traffic light waiting for the green light. It is also assumed that the path planning information is that the vehicle waits until the red light ends and the green light is on, and then goes straight through a traffic light intersection. In other words, an expected vehicle behavior is that the vehicle waits until the red light ends and the green light is on, and then goes straight through the traffic light intersection.

In view of this, a training process of the sampling network is as follows:

Step 1: Input, to the sampling network, the 30 frames of data collected by each sensor in the three sensors, to obtain frame-extracted data output by the sampling network.

Step 2: Input the obtained frame-extracted data to the computing model for processing, to obtain a driving decision of the vehicle output by the computing model, and then determine a feedback reward value of each sensor at a next moment based on the driving decision. For example, it is assumed that the driving decision of the vehicle obtained through processing by the computing model is that the vehicle waits until the red light turns green, and then the vehicle goes straight through the traffic light intersection. In this case, based on the driving decision, a feedback reward value $r\_t+1\_1=100$ may be assigned to the sensor 1 located in the front of the vehicle, a feedback reward value $r\_t+1\_2=30$ may be assigned to the sensor 2 located in the rear of the vehicle, and a feedback reward value $r\_t+1\_3=30$ may be assigned to the sensor 3 located on the right side of the vehicle.

Step 3: Put the feedback reward values determined in Step 2 into Formula 1. Because an objective of reinforcement learning is to maximize the total reward value R as much as possible, values of Camera_weight_1, Camera_weight_2, and Camera_weight_3 at the next moment may be updated based on values of Camera_weight_1, Camera_weight_2, and Camera_weight_3 at a current moment. For example, the values of Camera_weight_1, Camera_weight_2, and Camera_weight_3 at the next moment may be updated based on a genetic algorithm or a simulated annealing algorithm. It may be understood that values of $s\_t+1$ and $a\_t+1$ at the next moment also need to be updated. Generally, the values of $a\_t+1$ of the sensors at the next moment may be determined based on the values of Camera_weight_1, Camera_weight_2, and Camera_weight_3 at the next moment. For example, the values of $a\_t+1$ of the sensors at the next moment may be obtained by sorting the values of Camera_weight_1, Camera_weight_2, and Camera _weight_3 at the next moment.

Step 4: Perform Step 1 to Step 3 again until the total reward value R is stable and infinitely approaches the maximum, to obtain a final sampling network.

S304: Process the target data corresponding to each sensor in the N sensors.

In some feasible implementations, the target data corresponding to each sensor in the N sensors is processed. Herein, processing the target data corresponding to each sensor may be understood as sequentially inputting the target data corresponding to each sensor to the computing model for processing. For example, the computing model in this embodiment of this application may be a driving behavior decision-making network. To be specific, the target data corresponding to each sensor is input to the computing model, and a next driving behavior of the vehicle, a next operation of the vehicle, or a next driving decision may be determined by using the computing model.

Generally, data of a sensor may be scheduled and processed through a thread. In an implementation, data processing priorities corresponding to different sensors may be determined based on weight values corresponding to the different sensors. In other words, a processing priority of the target data corresponding to each sensor in the N sensors is positively correlated with the weight value corresponding to each sensor. Specifically, a larger weight value corresponding to a sensor indicates a higher processing priority of target data corresponding to the sensor, or it is understood that a larger weight value corresponding to a sensor indicates a higher priority of a thread used to schedule the sensor. A thread with a higher priority may preferentially use a processing resource to process corresponding target data. In other words, a higher priority of a thread indicates earlier processing of the thread.

For example, for Scenario 1, it is assumed that the sensor 1 is scheduled through the thread 1, the sensor 2 is scheduled through the thread 2, and the sensor 3 is scheduled through the thread 3. Based on the weight value 1 corresponding to the sensor 1, the weight value 0.4 corresponding to the sensor 2, and the weight value 0.3 corresponding to the sensor 3, a priority 2 may be assigned to the thread 1, a priority 1 may be assigned to the thread 2, and a priority 0 may be assigned to the thread 3. Priority 2>Priority 1>0. Therefore, the sensor 1 inputs data to the subsequent computing model at a rate of 30 frames per second with a highest thread priority, the sensor 2 inputs data to the computing model at a rate of 12 frames per second with a second lowest priority, and the sensor 3 inputs data to the computing model at a rate of 9 frames per second with a lowest priority. In this case, the computing model preferentially obtains the target data input by the sensor 1 and processes the target data, a priority of the target data of the sensor 2 is slightly lower than a priority of the target data of the sensor 1, and a priority of the target data of the sensor 3 is slightly lower than the priority of the target data of the sensor 2.

In another implementation, data processing priorities corresponding to different sensors may be determined based on sizes of target data corresponding to the different sensors. In other words, the processing priority of the target data corresponding to each sensor in the N sensors is positively correlated with a size of the target data corresponding to each sensor.

It may be understood that, when data collection frame rates of all the N sensors are the same, or when data collection frame rates of sensors in the N sensors are different but are preprocessed to be the same, for example, a frame rate of each sensor is 30 frames per second, the data processing priority corresponding to the target data may be directly determined based on the size of the target data. Generally, a larger size of target data corresponding to a sensor indicates a higher data processing priority of target data corresponding to the sensor.

For example, it is assumed that there are three sensors: a sensor 1, a sensor 2, and a sensor 3. A frame rate of each sensor in the three sensors is 30 frames per second. It is assumed that a size of target data corresponding to the sensor 1 is 30 frames, a size of target data corresponding to the sensor 2 is 12 frames, and a size of target data corresponding to the sensor 3 is 9 frames. Therefore, it may be determined that a data processing priority of the target data corresponding to the sensor 1 is higher than a data processing priority of the target data corresponding to the sensor 2, and the data processing priority of the target data corresponding to the sensor 2 is higher than a data processing priority of the target data corresponding to the sensor 3.

It may be understood that, when data collection frame rates of one or more of the N sensors are different or inconsistent, a weight value corresponding to each sensor may alternatively be determined based on a size of target data corresponding to each sensor in the N sensors and a size of data collected by each sensor in the N sensors, to determine data processing priorities corresponding to different sensors based on weight values corresponding to the different sensors.

For example, it is assumed that there are three sensors: a sensor 1, a sensor 2, and a sensor 3. A frame rate of the sensor 1 is 30 frames per second, a frame rate of the sensor 2 is 25 frames per second, and a frame rate of the sensor 3 is 20 frames per second. It is assumed that a size of target data corresponding to the sensor 1 is 30 frames, a size of target data corresponding to the sensor 2 is 12 frames, and a size of target data corresponding to the sensor 3 is 9 frames. Therefore, it may be determined that a weight value corresponding to the sensor 1 is 1, a weight value corresponding to the sensor 2 is 0.48, and a weight value corresponding to the sensor 3 is 0.45. Because 1>0.48>0.45, it may be determined that a data processing priority of the target data corresponding to the sensor 1 is higher than a data processing priority of the target data corresponding to the sensor 2, and the data processing priority of the target data corresponding to the sensor 2 is higher than a data processing priority of the target data corresponding to the sensor 3.

In this embodiment of this application, the data collected by each sensor in the N sensors is sampled based on the current path planning information and/or ambient environment information of the vehicle, to obtain the target data for subsequent processing such as driving decision-making in autonomous driving. This can reduce a data processing workload, thereby improving data processing efficiency and reducing a data processing delay. Specifically, in this embodiment of this application, the weight values corresponding to the different sensors may be determined based on the path planning information and/or the ambient environment information, and then the data collected by the corresponding sensors is sampled based on the weight values, to obtain the target data corresponding to each sensor. In this implementation, in a current scenario, a large amount of data may be retained for a sensor with higher importance, and a small amount of data may be retained for a sensor with lower importance. In this way, data processing workload can be reduced, thereby improving the data processing efficiency. In addition, precision of a data processing result obtained by processing the target data, for example, precision of a driving decision obtained by processing the target data, may not be affected. Applicability is higher.

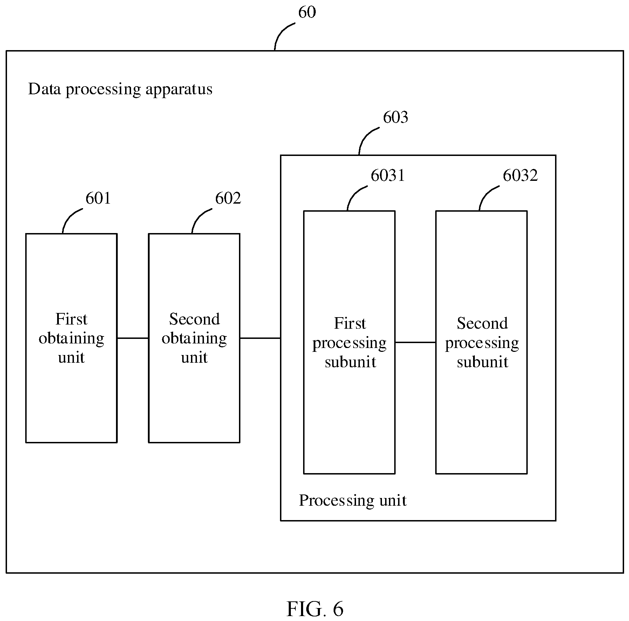

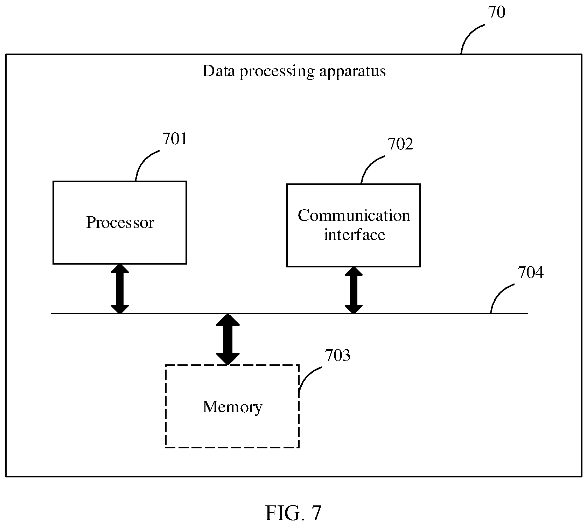

The following describes in detail the data processing apparatus provided in this application with reference to FIG. 6 and FIG. 7.

FIG. 6 is a diagram of a structure of a possible data processing apparatus according to an embodiment of this application.

Optionally, the data processing apparatus 60 may be a mobile terminal, for example, an independent device like a vehicle, or may be a component included in an independent device, for example, a chip, a software module, or an integrated circuit. The data processing apparatus 60 is configured to implement the foregoing data processing method, for example, the data processing method in the embodiment shown in FIG. 3.

In a possible implementation, the data processing apparatus 600 may include a first obtaining unit 601, a second obtaining unit 602, and a processing unit 603. The processing unit 603 may include a first processing subunit (6031) and a second processing subunit (6032). The first processing subunit 6031 may be configured to implement a calculation or processing function of the foregoing data processing method, for example, S303, and/or configured to support another process of the technology described in the foregoing method. The second processing subunit 6032 may be configured to implement a calculation or processing function of the foregoing data processing method, for example, S304, and/or configured to support another process of the technology described in the foregoing method. The first obtaining unit 601 may be configured to perform a data obtaining operation in the foregoing data processing method, for example, S301, and/or configured to support another process of the technology described in this specification. The second obtaining unit 602 may be configured to perform a data obtaining operation in the foregoing data processing method, for example, S302, and/or configured to support another process of the technology described in this specification. In some possible implementation scenarios, the first obtaining unit 601 may alternatively be replaced with a communication interface module and/or a transceiver module, and the interface module and/or the transceiver module may be configured to support another process of the technology described in the foregoing method.

In a possible design, the data processing apparatus 60 is configured to implement the data processing method in the embodiment shown in FIG. 3.

The first obtaining unit 601 is configured to obtain data collected by each sensor in N sensors on a vehicle. N is a positive integer.

The second obtaining unit 602 is configured to obtain path planning information and/or ambient environment information of the vehicle.

The processing unit 603 is configured to sample, based on the path planning information and/or the ambient environment information of the vehicle, target data corresponding to each sensor from the data collected by the sensor. A size of target data corresponding to at least one sensor in the N sensors is less than a size of data collected by the at least one sensor.

The processing unit 603 is configured to process the target data corresponding to each sensor in the N sensors.

In a possible implementation, the second obtaining unit 602 is specifically configured to:

obtain positioning information of the vehicle; and
determine the ambient environment information of the vehicle based on the positioning information and map information.

In a possible implementation, the processing unit 603 includes the first processing subunit 6031, and the first processing subunit 6031 is specifically configured to:

determine, based on the path planning information and/or the ambient environment information of the vehicle, a weight value corresponding to each sensor in the N sensors; and
sample, based on the weight value corresponding to each sensor, the data collected by each sensor, to obtain the target data corresponding to each sensor in the N sensors.

In a possible implementation, the first processing subunit 6031 is specifically further configured to:
obtain, from a weight value mapping relationship table, the weight value corresponding to each sensor and corresponding to the path planning information and/or the ambient environment information. The weight value mapping relationship table includes a mapping relationship between path planning information and/or ambient environment information and a weight value corresponding to each sensor.

In a possible implementation, the target data corresponding to an $i^{th}$ sensor is a frame Yi, where

$$Yi = Xi \times Zi.$$

Xi represents a quantity of frames of data collected by the $i^{th}$ sensor, Zi represents a weight value corresponding to the $i^{th}$ sensor, $0 \leq Zi \leq 1$, and $i \in [1, N]$.

In a possible implementation, a processing priority of the target data corresponding to each sensor in the N sensors is positively correlated with the weight value corresponding to each sensor.

In a possible implementation, the processing unit 603 includes the second processing subunit 6032, and the second processing subunit 6032 is specifically configured to:

input the path planning information and/or the ambient environment information and the data collected by each sensor in the N sensors to a sampling network; and
obtain the target data that corresponds to each sensor in the N sensors and that is output by the sampling network.

In a possible implementation, a processing priority of the target data corresponding to each sensor in the N sensors is positively correlated with a size of the target data corresponding to each sensor.

In a possible implementation, the second processing subunit 6032 is configured to process the target data corresponding to each sensor in the N sensors.

In a possible implementation, the first obtaining unit 601, the second obtaining unit 602, and the first processing subunit 6031 are located in a CPU, and the second processing subunit 6032 is located in an artificial intelligence AI computing unit. For example, the AI computing unit may be an AI core.

For related descriptions, refer to the descriptions in FIG. 3.

FIG. 7 is a diagram of a structure of another possible data processing apparatus according to an embodiment of this application.

The data processing apparatus 70 may be a mobile terminal, for example, an independent device like a vehicle, or may be a component included in an independent device, for example, a chip, a software module, or an integrated circuit. The data processing apparatus 70 may include at least one processor 701 and a communication interface 702. Optionally, at least one memory 703 may be included. Further, optionally, a connection line 704 may be further included. The processor 701, the communication interface 702, and/or the memory 703 are connected through the connection line 704 and communicate with each other through the connection line 704, to transfer a control signal and/or a data signal.

(1) The processor 701 is a module for performing an arithmetic operation and/or a logical operation, and may specifically include one or more of the following apparatuses: a central processing unit (central processing unit, CPU), a microcontroller unit (microcontroller unit, MCU), an application processor (application processor, AP), a time-to-digital converter (time-to-digital converter, TDC), an electronic control unit (electronic control unit, ECU), a filter, a graphics processing unit (graphics processing unit, GPU), a microprocessor unit (microprocessor unit, MPU), an application-specific integrated circuit (application-specific integrated circuit, ASIC), an image signal processor (image signal processor, ISP), a digital signal processor (digital signal processor, DSP), a field programmable gate array (field programmable gate array, FPGA), a complex programmable logic device (complex programmable logic device, CPLD), a coprocessor (assisting the central processing unit in completing corresponding processing and application), a neural-network processing unit (neural-network processing unit, NPU), and/or the like.

(2) The communication interface 702 may be configured to provide information input or output for the at least one processor. In some possible scenarios, the communication interface 702 may include an interface circuit, and/or the communication interface 702 may be configured to receive data sent from the outside and/or send data to the outside. For example, the communication interface 702 may be a wired link interface including an Ethernet cable and the like, or may be a wireless link (Wi-Fi, Bluetooth, universal wireless transmission, an onboard short-range communication technology, another short-range wireless communication technology, or the like) interface. Optionally, the communication interface 702 may further include a transmitter (for example, a radio frequency transmitter or an antenna), a receiver, or the like coupled to the interface.

Optionally, if the data processing apparatus 70 is an independent device, the communication interface 702 may include a receiver and a transmitter. The receiver and the transmitter may be a same component or different components. When the receiver and the transmitter are a same component, the component may be referred to as a transceiver.

Optionally, if the data processing apparatus 70 is a chip or a circuit, the communication interface 702 may include an input interface and an output interface, and the input interface and the output interface may be a same interface or different interfaces.

Optionally, a function of the communication interface 702 may be implemented through a transceiver circuit or a dedicated transceiver chip. The processor 701 may be implemented by using a dedicated processing chip, a processing circuit, a processor, or a general-purpose chip.

(3) The memory 703 is configured to provide storage space, and the storage space may store data such as an operating system and a computer program. The memory 703 may be one or a combination of a random-access memory (random-access memory, RAM), a read-only memory (read-only memory, ROM), an erasable programmable read-only memory (erasable programmable read-only memory, EPROM), a compact disc read-only memory (compact disc read-only memory, CD-ROM), and the like.

Functions and actions of modules or units in the data processing apparatus 70 listed above are merely examples for description.

Functional units in the data processing apparatus 70 may be configured to implement the foregoing data processing method, for example, the method described in the embodiment shown in FIG. 3. Herein, detailed descriptions are omitted to avoid repetition.

Optionally, the processor 701 may be a processor (referred to as a dedicated processor for ease of differentiation) that is specially configured to perform the foregoing method, or may be a processor (referred to as a dedicated processor for ease of differentiation) that invokes a computer program to perform the foregoing method. Optionally, the at least one processor may further include both a special-purpose processor and a general-purpose processor.

Optionally, when a computing device includes at least one memory 703, if the processor 701 invokes a computer program to implement the foregoing method, the computer program may be stored in the memory 703.

An embodiment of this application further provides a chip system. The chip system includes a processor and a communication interface. The communication interface is configured to receive and/or send data, and/or the communication interface is configured to provide input and/or output for the processor. The chip system is configured to implement the foregoing data processing method, for example, the method shown in FIG. 3.

An embodiment of this application further provides a computer-readable storage medium. The computer-readable storage medium stores instructions. When the instructions are run on a computing device, the computing device is enabled to implement the foregoing data processing method, for example, the method in FIG. 3.

An embodiment of this application further provides a terminal. The terminal is configured to implement the foregoing data processing method, for example, the method shown in FIG. 3.

Optionally, the terminal may include a data processing apparatus (for example, a data processing apparatus 60 or a data processing apparatus 70).

Optionally, the terminal is a vehicle, an uncrewed aerial vehicle, or a robot. Alternatively, the terminal may be any possible smart home device, smart wearable device, smart manufacturing device, or the like.

An embodiment of this application further provides a computer program product. The computer program product includes computer instructions. When the computer instructions are executed by a computing device, the foregoing data processing method is implemented.

This application further provides a data processing system. The data processing system includes a data processing apparatus and N sensors, and the N sensors are deployed on a vehicle. Optionally, the data processing apparatus may be integrated into a mobile data center (mobile data center, MDC) of the vehicle.

This application further provides a data processing system. The data processing system includes a vehicle and a server. The server includes a data processing apparatus, and the vehicle includes N sensors.

In embodiments of this application, the term such as "example" or "for example" indicates giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. "At least one item (piece) of the following" or a similar expression thereof means any combination of these items, including a singular item (piece) or any combination of plural items (pieces). For example, at least one of a, b, or c may indicate a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first device and a second device are merely for ease of description, and do not indicate a difference of the first device and the second device in terms of a structure and a degree of importance. In some embodiments, the first device and the second device may alternatively be the same device.

According to the context, the term "when" used in the foregoing embodiments may be interpreted as a meaning of "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application. A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

**Claims**

1. A data processing method, comprising:

obtaining data collected by each sensor in N sensors on a vehicle, wherein N is a positive integer;
obtaining path planning information and/or ambient environment information of the vehicle;
sampling, based on the path planning information and/or the ambient environment information of the vehicle, target data corresponding to each sensor from the data collected by the sensor, wherein a size of target data corresponding to at least one sensor in the N sensors is less than a size of data collected by the at least one sensor; and

processing the target data corresponding to each sensor in the N sensors.

2. The method according to claim 1, wherein the sampling, based on the path planning information and/or the ambient environment information of the vehicle, target data corresponding to each sensor from the data collected by the sensor comprises:

determining, based on the path planning information and/or the ambient environment information of the vehicle, a weight value corresponding to each sensor in the N sensors; and

sampling, based on the weight value corresponding to each sensor, the data collected by each sensor, to obtain the target data corresponding to each sensor in the N sensors.

3. The method according to claim 2, wherein the determining, based on the path planning information and/or the ambient environment information of the vehicle, a weight value corresponding to each sensor in the N sensors comprises: obtaining, from a weight value mapping relationship table, the weight value corresponding to each sensor and corresponding to the path planning information and/or the ambient environment information, wherein the weight value mapping relationship table comprises a mapping relationship between path planning information and/or ambient environment information and a weight value corresponding to each sensor.

4. The method according to claim 2 or 3, wherein target data corresponding to an $i^{th}$ sensor in the N sensors is a frame $Y_i$, wherein

$$Y_i = X_i \times Z_i,$$

wherein
$X_i$ represents a quantity of frames of data collected by the $i^{th}$ sensor, $Z_i$ represents a weight value corresponding to the $i^{th}$ sensor, $0 \leq Z_i \leq 1$, and $i \in [1, N]$.

5. The method according to any one of claims 2 to 4, wherein a processing priority of the target data corresponding to each sensor in the N sensors is positively correlated with the weight value corresponding to each sensor.

6. The method according to claim 1, wherein the sampling, based on the path planning information and/or the ambient environment information of the vehicle, target data corresponding to each sensor from the data collected by the sensor comprises:

inputting the path planning information and/or the ambient environment information and the data collected by each sensor in the N sensors to a sampling network; and

obtaining the target data that corresponds to each sensor in the N sensors and that is output by the sampling network.

7. The method according to claim 6, wherein a processing priority of the target data corresponding to each sensor in the N sensors is positively correlated with a size of the target data corresponding to each sensor.

8. The method according to any one of claims 1 to 7, wherein the obtaining ambient environment information of the vehicle comprises:

obtaining positioning information of the vehicle; and

determining the ambient environment information of the vehicle based on the positioning information and map information.

9. A data processing apparatus, comprising:

one or more processors, one or more transceivers, and one or more memories, wherein
the one or more transceivers are configured to receive data;
the one or more memories are configured to store a computer program; and
the one or more processors are configured to execute the computer program stored in the one or more memories, so that a communication apparatus is enabled to perform the method according to any one of claims 1 to 8.

10. The data processing apparatus according to claim 9, wherein the apparatus is a vehicle-mounted computing platform.

11. A computer storage medium, wherein the computer storage medium stores a computer program, and when the computer program is run, the method according to any one of claims 1 to 8 is implemented.

12. A computer program product, wherein the computer program product comprises a computer program, and when the computer program is run, the method according to any one of claims 1 to 8 is implemented.

13. A chip, wherein the chip comprises:
a processor and a communication interface, wherein the communication interface is configured to receive data, and the processor is configured to implement the method according to any one of claims 1 to 8 based on the data.

14. A data processing system, wherein the data processing system comprises N sensors and the data processing apparatus according to claim 9, and the N sensors are deployed on a vehicle.

15. A data processing system, wherein the data processing system comprises a vehicle and a server, the server comprises the data processing apparatus according to claim 9, and the vehicle comprises N sensors.

16. A terminal, wherein the terminal comprises the data processing apparatus according to claim 9 or 10, and the terminal comprises a vehicle, a smart home device, a smart manufacturing device, a robot, a smart wearable device, or an uncrewed aerial vehicle.

FIG. 1

FIG. 2

Obtain data collected by each sensor in N sensors on a vehicle — S301

Obtain path planning information and/or ambient environment information of the vehicle — S302

Sample, based on the path planning information and/or the ambient environment information, target data corresponding to each sensor from the data collected by the sensor — S303

Process the target data corresponding to each sensor in the N sensors — S304

FIG. 3

Sensor={sensor 1; sensor 2; sensor 3}

Path planning information 1:
A vehicle goes straight
Path planning information 2:
The vehicle turns left
Path planning information 3:
The vehicle turns right

...

Path planning information M:
The vehicle reverses

Ambient environment information 1:
traffic light intersection information
Ambient environment information 2:
speed measurement information
Ambient environment information 3:
fork information

...

Ambient environment information R:
speed limit information

Weight value: $Z_{sensor\ identifier-path\ planning\ information/ambient\ environment\ information}$

|  | Ambient environment information 1 | Ambient environment information 2 | Ambient environment information 3 | ... | Ambient environment information R |
|---|---|---|---|---|---|
| Path planning information 1 | $Z_{1-11}; Z_{2-11}; Z_{3-11};$ | $Z_{1-12}; Z_{2-12}; Z_{3-12};$ | $Z_{1-13}; Z_{2-13}; Z_{3-13};$ | ... | $Z_{1-1R}; Z_{2-1R}; Z_{3-1R}$ |
| Path planning information 2 | $Z_{1-21}; Z_{2-21}; Z_{3-21};$ | $Z_{1-22}; Z_{2-22}; Z_{3-22};$ | $Z_{1-23}; Z_{2-23}; Z_{3-23};$ | ... | $Z_{1-2R}; Z_{2-2R}; Z_{3-2R}$ |
| Path planning information 3 | $Z_{1-31}; Z_{2-31}; Z_{3-31};$ | $Z_{1-32}; Z_{2-32}; Z_{3-32};$ | $Z_{1-33}; Z_{2-33}; Z_{3-33};$ | ... | $Z_{1-3R}; Z_{2-3R}; Z_{3-3R}$ |
| ⋮ | ⋮ | ⋮ | ⋮ | ⋮ | ⋮ |
| Path planning information M | $Z_{1-M1}; Z_{2-M1}; Z_{3-M1}$ | $Z_{1-M2}; Z_{2-M2}; Z_{3-M2}$ | $Z_{1-M3}; Z_{2-M3}; Z_{3-M3}$ | ... | $Z_{1-MR}; Z_{2-MR}; Z_{3-MR}$ |

FIG. 4

FIG. 5

FIG. 6

70

Data processing apparatus

701

Processor

702

Communication interface

704

703

Memory

FIG. 7

## INTERNATIONAL SEARCH REPORT

| | International application No. |
|---|---|
| | **PCT/CN2023/098522** |

**A. CLASSIFICATION OF SUBJECT MATTER**

G05D 1/02(2020.01)i

According to International Patent Classification (IPC) or to both national classification and IPC

**B. FIELDS SEARCHED**

Minimum documentation searched (classification system followed by classification symbols)

IPC:G05D

Documentation searched other than minimum documentation to the extent that such documents are included in the fields searched

Electronic data base consulted during the international search (name of data base and, where practicable, search terms used)

CNABS, CNTXT, WPABS, ENTXT, DWPI, VEN, USTXT, WOTXT, CNKI: 车辆, 路径, 传感器, 大小, 数据量, 权重, car, vehicle, path, sensor, size, data volume, weight

**C. DOCUMENTS CONSIDERED TO BE RELEVANT**

| Category* | Citation of document, with indication, where appropriate, of the relevant passages | Relevant to claim No. |
|---|---|---|
| Y | CN 112462752 A (XINGHUO TECH SHENZHEN CO., LTD.) 09 March 2021 (2021-03-09) description, paragraphs 5-38 and 49-115, and figures 2-5 | 1-16 |
| Y | CN 110544376 A (HANGZHOU BROADXT TECHNOLOGY CO., LTD.) 06 December 2019 (2019-12-06) description, paragraphs 24 and 31-108, and figures 1-4 | 1-16 |
| Y | CN 111780987 A (GUANGZHOU WERIDE TECHNOLOGY CO., LTD.) 16 October 2020 (2020-10-16) description, paragraphs 33-246 | 1-16 |
| A | US 2016379064 A1 (SHARP LABORATORIES OF AMERICA INC.) 29 December 2016 (2016-12-29) entire document | 1-16 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 August 2023** | **21 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/098522**

| Patent document cited in search report | | | Publication date (day/month/year) | Patent family member(s) | | | Publication date (day/month/year) |
|---|---|---|---|---|---|---|---|
| CN | 112462752 | A | 09 March 2021 | None | | | |
| CN | 110544376 | A | 06 December 2019 | CN | 110544376 | B | 22 June 2021 |
| CN | 111780987 | A | 16 October 2020 | CN | 111780987 | B | 12 July 2022 |
| US | 2016379064 | A1 | 29 December 2016 | WO | 2017004085 | A1 | 05 January 2017 |
| | | | | US | 9811743 | B2 | 07 November 2017 |

Form PCT/ISA/210 (patent family annex) (July 2022)

REFERENCES CITED IN THE DESCRIPTION

**Patent documents cited in the description**

- CN 202210783287